# EUROPEAN PATENT APPLICATION

(11) **EP 4 752 976 A1**
(43) Date of publication of application: **03.06.2026**
(21) Application number: 24216584.3
(22) Date of filing: 29.11.2024
(51) Int. Cl.: H01M 4/58, H01M 10/0525, H01M 10/54

(54) **REDOX-MEDIATED DIRECT CATHODE REGENERATION OF SPENT CATHODES**

(71) Applicant: Universidad De Burgos, 09001 Burgos (ES)
(72) Inventor: Ventosa Arbaizar, Edgar, 09200 Miranda de Ebro (ES); Marin Tajadura, Gimena, 09007 Burgos (ES); Ruiz Fernandez, Virginia, 09001 Burgos (ES); Rubio Presa, Ruben, 09006 Burgos (ES)
(74) Representative: Bringer IP

(57) **Abstract**

A cathode regeneration system for the regeneration of a lithium-ion battery cathode includes a relithiation tank comprising spent lithium-ion battery cathode material immersed in a lithium aqueous electrolyte with a redox mediator and lithium containing salt, an electrochemical reactor coupled to the relithiation tank and regenerating the redox mediator in the electrolyte, a counter tank coupled to the reactor and receiving accumulated lithium ferricyanide from the reactor while supplying the electrolyte to the reactor, an electrochemical cell coupled to the counter tank and regenerating the electrolyte for the counter tank and a waste tank coupled to the electrochemical cell and receiving oxygen waste from the electrochemical cell.

## Description

### BACKGROUND OF THE INVENTION

### Field of the Invention

The present invention relates to the technical field of lithium-ion batteries and more particularly to the cathode regeneration of a lithium-ion battery cathode.

### Description of the Related Art

The lithium-ion battery has proven to be the most popular rechargeable battery chemistry available for use today. Lithium-ion batteries can be found in a wide range of consumer products from mobile phones to electric vehicles and even aircraft. A typical lithium-ion battery has either a single lithium-ion cell or multiple lithium-ion cells, along with a protective circuit board. Each cell includes a positive electrode (anode) and a negative electrode (cathode) separated by a separator such as a porous polymeric film that separates the electrodes while enabling an exchange of lithium ions from one side to the other. Finally, each electrode includes an exterior conductive foil referred to as a current collector that permits a passage of current between the battery, a supported device and an energy source that powers the battery.

As is the case with most batteries, the repeated use of a lithium-ion battery produces a slow degradation ultimately rendering the lithium-ion battery spent. The disposal of a spent lithium-ion battery then results unless the lithium-ion battery is treated for refurbishing, e.g. recycled. Yet, the disposal of a lithium-ion battery is wasteful, and also produces a detrimental environmental impact. As such, recycling or regenerating the lithium-ion battery is much preferred.

The cathode is the primary focus of regeneration. Cathode material typically includes lithium cobalt oxide (LCO), lithium nickel manganese cobalt oxide (NMC), lithium nickel cobalt oxide doped with alumina (NCA), lithium manganese oxide (LMO) or lithium iron phosphate (LFP). Among these cathodic materials, LFP is one of the best candidate materials for electric vehicles and stationary energy storage due to its low cost, safety and long life. Without regard to the material of the cathode, though, regeneration methods of a spent cathode for a lithium-ion battery can be categorized as either destructive or non-destructive. Destructive methods for the regeneration of a cathode are based upon the extraction of precursor compounds while non-destructive, direct regeneration methods are based upon the healing of the cathode material.

Among non-destructive, direct regeneration methods, electrochemical regeneration of cathode materials using a power source instead of reducing reagents/environments represents a promising strategy due to its simplicity and the possibility to reuse/recycle the re-lithiated media. Such electrochemical recycling approaches include either the use of a lithium-containing electrolyte solution, pure lithium/pre-lithiated anodes or pre-lithiated separators as lithium sources. Electrochemical lithiation has proven to restore the structure of the spent cathode, enabling its reuse in a new battery with considerable capacity recovery and excellent long-cycle stability. However, the primary technical limitations of current electrochemical recycling methods include a lack of scalability and the use of non-friendly organic solvents.

### BRIEF SUMMARY OF THE INVENTION

Embodiments of the present invention address technical deficiencies of the art in respect to the regeneration of spent cathodes of a lithium ion battery. To that end, embodiments of the present invention provide for a novel and non-obvious cathode regeneration system for the regeneration of a lithium-ion battery cathode. In one embodiment of the invention, a cathode regeneration system for the regeneration of a lithium-ion battery cathode includes:
- a relithiation tank comprising spent lithium-ion battery cathode material immersed in a lithium aqueous electrolyte with a redox mediator and lithium containing salt;
- an electrochemical reactor coupled to the relithiation tank and regenerating the redox mediator in the electrolyte;
- a counter tank coupled to the reactor and receiving accumulated lithium ferricyanide from the reactor while supplying the electrolyte to the reactor;
- an electrochemical cell coupled to the counter tank and regenerating the electrolyte for the counter tank; and,
- a waste tank coupled to the electrochemical cell, receiving oxygen waste from the electrochemical cell and where feeding of consumed lithium ions takes place

In one aspect of the embodiment, the electrolyte present in the relithiation tank includes a concentration of the redox mediator ranging from 0.1 to 1 M and a concentration of the lithium salt ranging from 0.1 to 2 M. In another aspect of the embodiment, the electrochemical reactor includes an anode half cell and a cathode half cell separated by an ion selective membrane. The cathode half cell performs regeneration of the redox mediator. The anode half cell in turn performs a counter reaction to the regeneration of the redox mediator. Optionally, the electrochemical reactor further includes a three dimensional graphite felt as an electrode.

In yet another aspect of the embodiment, the electrochemical cell includes an anode half cell and a cathode half cell separated by an ion selective membrane. The cathode half cell of the electrochemical cell receives an oxidized species from an anode half cell of the electrochemical reactor, performs regeneration of the oxidized species and returns the regenerated oxidized species to the anode half cell of the electrochemical reactor. The anode half cell oxidizes water to oxygen as a counter reaction to a regeneration of the redox mediator in a cathode half cell of the electrochemical reactor. The anode half cell of the electrochemical cell contains a lithium salt in a concentration ranging from 0.1 to 2 M.

In even yet another aspect of the embodiment, the anode half cell of the electrochemical cell includes a platinum sheet kinetically accelerating the oxidation of the water. Alternatively, the anode half cell of the electrochemical cell can include a three dimensional mesh of platinum kinetically accelerating the oxidation of the water. Finally, in yet a further aspect of the embodiment, the waste tank is in ionic communication with the relithiation tank passing lithium ions derived from lithium hydroxide in the waste tank from the waste tank to the relithiation tank across a lithium ion concentration gradient there between.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a schematic illustration of a cathode regeneration system for the regeneration of a lithium-ion battery cathode; and,
Figure 2 is a flow chart illustrating a process for the regeneration of a cathode of a lithium-ion battery.

### DETAILED DESCRIPTION OF THE INVENTION

Embodiments of the invention provide for a cathode regeneration system for the regeneration of a lithium-ion battery cathode. In accordance with an embodiment of the invention, a cathode regeneration system for the regeneration of a lithium-ion battery cathode begins with a relithiating tank containing pelletized spent LFP and a reducing electrolyte. An electrochemical reactor in communication with the relithiating tank regenerates the reducing electrolyte while performing a counter reaction. A counter tank in communication with the electrochemical reactor cycles the elements of the counter reaction to and from the electrochemical reactor and an electrochemical cell in communication with the counter tank regenerates the counter reactor species generated during the counter reaction. Finally, a waste tank in communication with the electrochemical cell and also the relithiating tank collects the waste of the regeneration of the counter reactor species in the electrochemical cell and provides fresh lithium ions across a gradient to the relithiating tank.

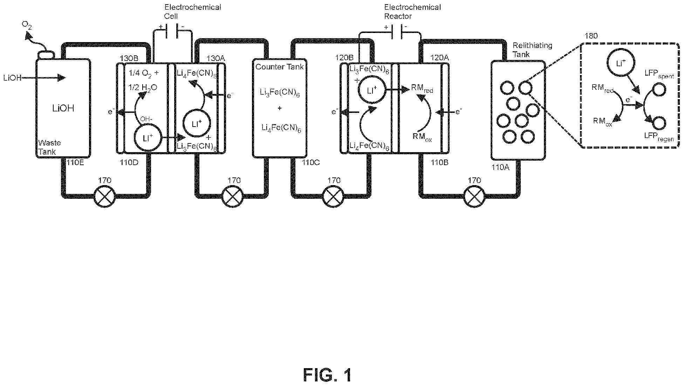

In illustration of one aspect of the embodiment, Figure 1 is a schematic illustration of a cathode regeneration system for the regeneration of a lithium-ion battery cathode. As shown in Figure 1, the system begins with a relithiation tank 110A in which pellets of spent LFP 180 are regenerated with lithium ions present in an aqueous reducing electrolyte pumped into the relithiating tank 110A by pump 170 from an electrochemical reactor 110B. The electrolyte contains the redox mediator in a concentration ranging from 0.1 to 1 M, preferentially 0.2 M, and a lithium-containing salt in a concentration ranging from 0.1 to 2 M, preferentially, 1 M LiCl.

The electrochemical reactor 110B, in turn, is in fluid communication with the relithiating tank 110A and performs regeneration of the redox mediator in the electrolyte solution. In this regard, during relithiation of the spent LFP, the redox mediator loses an electron from oxidation. As such, the electrochemical reactor 110B regenerates the redox mediator so that its reducing capability is regenerated. To that end, the electrochemical reactor consists of two half cells 120A,120B separated by an ion selective membrane.

In the cathode half-cell 120A, regeneration of the redox mediator occurs, while a counter reaction is required for the anode half-cell. The oxidation of lithium ferrocyanide to lithium ferricyanide is selected for the counter reaction in the anode half-cell. The cathode half-cell 120A contains redox mediator and a lithium containing salt. Optionally, a three-dimensional graphite felt is included in the electrochemical reactor 110B as an electrode in order to increase surface area and thus the operating current density.

The anode half-cell 120B of the electrochemical reactor 110B, in turn, contains a soluble electroactive species, such as ferrocyanide, in a concentration ranging between 0.1 M - 1 M, preferentially 0.3 M. The anode half-cell 120B additionally includes lithium -containing salt in a concentration ranging between 0.1 M - 2 M, preferentially 1 M lithium chloride. As before, a three-dimensional graphite felt is used as electrode to increase the surface area and thereby increase the operating current density. Finally, an ion-selective membrane separates the cathode half-cell 120A from the anode half-cell 120B. Preferentially the membrane is cation-selective, so as to separate the cathode half-cell 120A from the anode half-cell 120B and to avoid an electrical short-circuit and the mixing of the electrolyte while maintaining ionic conductivity between the half-cells 120A, 120B.

A counter tank 110C further is provided and is in fluid communication with the anode half-cell 120B of the electrochemical reactor 110B by way of a pump. The counter tank 110C receives from the anode half-cell 120B accumulated lithium ferricyanide and stores the accumulated lithium ferricyanide. Further, the counter tank 110C contains the same electrolyte as in the anode half-cell 120B. An electrochemical cell 110D supports the regeneration of the counter reactor species consumed during the counter reaction in the electrochemical reactor 110B. Specifically, the electrochemical cell 110D has two half cells 130A,130B which are separated by an ion selective membrane.

In a first, cathode half-cell 130A, the regeneration of oxidized species generated as counter reaction in the electrochemical reactor 110B transpires, while a counter reaction is required for the anode half-cell 130B. Thus, the cathode half-cell 130A contains the same electrolyte as stored in the counter tank 110C. A three-dimensional graphite felt is included in the electrochemical cell 110D as an electrode so as to increase the surface area and correspondingly so as to increase the operating current density.

Generally, the anode half-cell 130B contains a lithium-containing salt in a concentration ranging between 0.1 M - 2 M, preferentially 1 M LiOH. In order to accelerate the kinetics of oxidation of water, a platinum sheet can be included in the anode half-cell 130B, although a three-dimensional mesh also can be used. Finally, an ion-selective membrane, preferentially cation-selective, separates the anode half-cell 130B and the cathode half-cell 130A in order to avoid electrical short-circuit and electrolyte mixing while maintaining ionic conductivity between the two.

Finally, the system includes a waste tank 110E. The waste tank 110E is in fluid communication with the electrochemical cell 110D and receives therefrom generated waste (oxygen) generated in the anode half-cell 130B. In addition, because the relihitation process consumes lithium-ions, a concentration gradient results as between the relithiation tank 110A and the waste tank 110E. Consequently, lithium ions are added to the waste tank on demand, for example as lithium hydroxide.

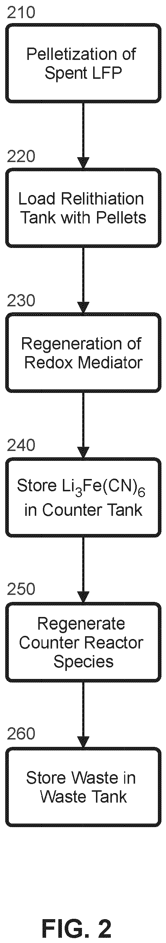

In further illustration of the operation of the system of Figure 1, Figure 2 is a flow chart illustrating a process for the regeneration of a cathode of a lithium-ion battery. Beginning in block 210, spent LFP pellets are prepared by extruding a mixture of spent LFP cathodes dispersed in NMP. In particular, LFP pellets are prepared by extruding a mixture of LFP powder, Ketjen Black (KB) and polyvinylidene fluoride (PVDF) in N-methyl-2-pyrrolidone (NMP) with a 80:10:10 (LFP:KB:PVDF) composition from a 20 mL-syringe. Obtained filaments of 1.5 mm diameter were cut into 8-14 mm length pieces and dried in an oven at 60 °C for 24 hours.

Then, in block 220, the relithiation tank is filled with an electrolyte containing a redox mediator and a lithium containing salt. The relithiation tank is then loaded with the spent LHP pellets. The introduction of the spent LFP pellets to the redox mediator results in a spontaneous reaction involving heterogenous charge transfer between the redox mediator dissolved in the electrolyte and the solid spent LFP pellets. In particular, the redox mediator (RM_{red}) is oxidized and the spent battery material (Li₁₋ₓFePO₄) is reduced, according to following reaction:

Li₁₋ₓFePO₄ + RM_{red} + Li⁺ -> LiFePO₄ + RMₒₓ

During reduction of the spent battery materials lithium-ion are spontaneously inserted in the bulk material. As a result of the spontaneous reaction, the spent electrode material is regenerated, but the redox mediator is oxidized losing its reducing ability.

In block 230, the oxidized mediator, RMₒₓ, is circulated from the relithiation tank back to the cathode half-cell of the electrochemical reactor, where it is electrochemically regenerated continuously to the reduced form of the redox pair, RM_{red}. This reaction continues until all spent battery material is regenerated. As counter reaction in the anode half-cell, Li₄Fe(CN)₆ is oxidized to Li₃Fe(CN)₆ + Li⁺. The reactions are illustrated as follows:

Cathode half-cell: RMₒₓ + e⁻ -> RM_{red}

Anode half-cell: Li₄Fe(CN)₆ - e' -> Li₃Fe(CN)₆ + Li⁺

Simultaneously, there is a continuous supply of lithium ions that migrate from the anode half-cell to the cathode half-cell compartment through the ion selective membrane to balance charges. An electrical load is applied to the electrochemical cell to drive the reactions. The required cell voltage to be applied depends upon the difference in the redox potentials of the redox mediator and the soluble active species used as counter reaction.

As the regeneration of spent battery materials transpires, oxidation of Li₄Fe(CN)₆, to Li₃Fe(CN)₆ continues, leading to accumulation of the oxidized species. In block 240, this electrolyte containing accumulated amount of Li₃Fe(CN)₆ is stored in the counter tank. Subsequently, in block 250 the accumulated Li₃Fe(CN)₆ is regenerated back to Li₄Fe(CN)₆ in the cathode half-cell of the electrochemical cell by powering on the electrochemical cell :

Cathode half-cell: Li₃Fe(CN)₆ + e⁻ + Li⁺ -> Li₄Fe(CN)₆

As a counter reaction, the oxidation of water to oxygen is selected for the anode half-cell as follows:

Anode half-cell: LiOH - e⁻ -> Li⁺ + ¼ O₂ + ½ H₂O

Simultaneously, there is a continuous supply of Li ions that migrate from the anode half-cell to the cathode half-cell compartment through the ion selective membrane to balance charges. The required cell voltage to be applied depends on the difference in the redox potentials of the soluble active species used as counter reaction and the water oxidation reaction.

Finally, in block 260, a waste tank stores the final waste generated in the process and accumulates a deficiency of lithium ions that are consumed for the relithiation of the battery material. The waste in the form of oxygen is released from the systems through an aperture at the top part of the tank. This aperture is also used to replenish lithium ions by addition of LiOH.

Of note, the progress of the relithiation process is controlled by monitoring the electrical load to the electrochemical reactor. Once all the spent battery material loaded in the relithiation tank is regenerated, the redox mediator is not consumed anymore in the relithiation tank, hence the process of redox mediator regeneration in the electrochemical reactor stops. As a consequence, the electrical power consumption in the electrochemical reactor decreases. In particular, standard constant current (CC) - constant voltage (CV) protocol used for battery charging is used here. During the CC step, 10 mA cm⁻² is applied and the cut-off voltage changes with the RM voltage. Once this voltage is reached, the CV step applies the cut-off voltage until reaching 1 mA cm⁻², at this moment the relithiation has finished.

Once the process has concluded, the regenerated battery material is collected from the relithiation tank. The pelletization of the solid materials facilitates this process. A filtering mesh is used, lifted from bottom to top of the relithiation tank. Then, the system is ready to receive a new batch of spent LFP.

The corresponding structures, materials, acts, and equivalents of all means or steps plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention through its various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. A cathode regeneration system for the regeneration of a lithium-ion battery cathode, the system comprising:
a relithiation tank comprising spent lithium-ion battery cathode material immersed in a lithium aqueous electrolyte with a redox mediator and lithium containing salt;
an electrochemical reactor coupled to the relithiation tank and regenerating the redox mediator in the electrolyte;
a counter tank coupled to the reactor and receiving accumulated lithium ferricyanide from the reactor while supplying the electrolyte to the reactor;
an electrochemical cell coupled to the counter tank and regenerating the electrolyte for the counter tank; and,
a waste tank coupled to the electrochemical cell and receiving oxygen waste from the electrochemical cell and where feeding of consumed lithium ions takes place

2. The system of claim 1, wherein the electrolyte present in the relithiation tank comprises a concentration of the redox mediator ranging from 0.1 to 1 M and a concentration of the lithium salt ranging from 0.1 to 2 M.

3. The system of claim 1, wherein the electrochemical reactor comprises an anode half cell and a cathode half cell separated by an ion selective membrane, the cathode half cell performing regeneration of the redox mediator, and the anode half cell performing a counter reaction to the regeneration of the redox mediator.

4. The system of claim 3, wherein the electrochemical reactor further comprises a three dimensional graphite felt as an electrode.

5. The system of claim 1, wherein the electrochemical cell comprises an anode half cell and a cathode half cell separated by an ion selective membrane, the cathode half cell of the electrochemical cell receiving an oxidized species from an anode half cell of the electrochemical reactor, performing regeneration of the oxidized species and returning the regenerated oxidized species to the anode half cell of the electrochemical reactor, and the anode half cell oxidizing water to oxygen as a counter reaction to a regeneration of the redox mediator in a cathode half cell of the electrochemical reactor.

6. The system of claim 5, wherein the cathode half cell of the electrochemical cell contains a lithium salt in a concentration ranging from 0.1 to 2 M.

7. The system of claim 5, wherein the anode half cell of the electrochemical cell includes a platinum sheet kinetically accelerating the oxidation of the water.

8. The system of claim 5, wherein the anode half cell of the electrochemical cell includes a three dimensional mesh of platinum kinetically accelerating the oxidation of the water.

9. The system of claim 1, wherein the waste tank is in ionic communication with the relithiation tank passing lithium ions derived from lithium hydroxide in the waste tank from the waste tank to the relithiation tank across a lithium ion concentration gradient there between.
